# EUROPÄISCHE PATENTSCHRIFT

(11) **EP 1 789 468 B1**
(45) Veröffentlichungstag und Bekanntmachung des Hinweises auf die Patenterteilung: **05.03.2008**
(21) Anmeldenummer: 05771737.3
(22) Anmeldetag: 22.08.2005
(51) Int. Cl.: C08G 63/00, C08G 63/80, C08G 63/78

(54) **FESTPHASEN-POLYKONDENSATION VON POLYESTER MIT PROZESSGAS-REINIGUNG**
SOLID PHASE POLYCONDENSATION OF POLYESTER WITH PROCESS GAS CLEANING
POLYCONDENSATION EN PHASE SOLIDE DE POLYESTER AVEC LAVAGE DU GAZ DE PROCESSUS

(30) Priorität: 25.08.2004 DE 102004041370
(43) Veröffentlichungstag der Anmeldung: 30.05.2007
(73) Patentinhaber: Bühler AG, 9240 Uzwil (CH)
(72) Erfinder: CHRISTEL, Andreas, CH-9524 Zuzwil (CH); FERREIRA, Claudemiro, MG 37701-018 Pocos de Caldas (BR)
(74) Vertreter: Frommhold, Joachim
(86) Internationale Anmeldenummer: PCT/CH2005/000488
(87) Internationale Veröffentlichungsnummer: WO 2006/021117

(56) Entgegenhaltungen:
- EP-A- 0 717 061
- EP-A- 0 836 921
- US-A- 6 048 957
- US-B1- 6 548 031

## Beschreibung

Die Erfindung bezieht sich auf ein Verfahren zur Herstellung eines hochmolekularen Polyesters aus einem verfestigten Polyesterprepolymeren durch Festphasen-Polykondenation, wobei die Polykondensationsspaltprodukte aus der Festphasen-Polykondensationsreaktion mittels eines Prozessgases vom Produkt entfernt werden und das Prozessgas anschliessend von den Polykondensations-Spaltprodukten gereinigt und im wesentlichen rezykliert wird.

Die Erfindung bezieht sich auch auf eine Anlage zur Herstellung eines hochmolekularen Polyesters mit einem Kristallisationsapparat und einem Reaktionsapparat.

Verfahren zur Herstellung hochmolekularer Polykondensate mittels eines Schrittes der Festphasen-Polykondensation sind im Stand der Technik bekannt.

Üblicherweise wird dabei ein Prozessgas zumindest teilweise im Kreislauf geführt. Dieses Prozessgas muss dabei zumindest teilweise einer Reinigung unterzogen werden. Derartige Reinigungen sind zum Beispiel aus der EP 1100611 bekannt, wo die Reinigung durch eine katalytische Verbrennung erfolgt. Der Nachteil, der sich hier ergibt, sind die relativ hohen Verbrennungstemperaturen, die erzielt werden müssen, um zu einer vollständigen Verbrennung zu gelangen. Dies ist insbesondere problematisch, wenn Polyester, die mit Fremdstoffen belastet sind, verarbeitet werden.

Ebenfalls sind Gasreinigungen bekannt, wo ein Gaswäscher verwendet wird, in dem als Waschflüssigkeit eine organische Flüssigkeit verwendet wird, die anschliessend aufgearbeitet und in einem vorgelagerten Verfahrensschritt der Polyesterherstellung (Bearbeitungsschritt der Flüssigphasenkondensation) verbraucht wird. So wird zum Beispiel für die Polyethylenterephthalat-Herstellung Ethylenglykol als Waschflüssigkeit verwendet. Der Nachteil dieses Verfahrens ist, dass der Bearbeitungsschritt der Flüssigphasenkondensation und der Bearbeitungsschritt der Festphasensenkondensation und der Bearbeitungsschritt der Festphasen-Polykondensation mit einander gekoppelt werden müssen.

Es ist die Aufgabe der vorliegenden Erfindung, ein Verfahren zur Festphasen-Polykondensation von Polyestern zur Verfügung zu stellen, das mit verbesserter Energieeffizienz und unabhängig von einer Verwendungsmöglichkeit für eine organische Waschflüssigkeit betrieben werden kann.

Diese Aufgabe wird gemäss Anspruch 1 und Anspruch 17 gelöst.

Erfindungsgemäss erfolgt dabei die Reinigung des Prozessgases mittels einer wässrigen Waschflüssigkeit.

Erfindungsgemäss wird zur Reinigung des Prozessgases ein Gaswäscher verwendet, der mit einer wässrigen Waschflüssigkeit betrieben wird.

Vorteilhafte Ausführungen des erfindungsgemässen Verfahrens und der erfindungsgemässen Anlage sind in den Unteransprüchen beschrieben.

### Polyester

Bei dem Polyester handelt es sich um ein kristallisierbares, thermoplastisches Polyester, wie zum Beispiel Polyethylenterephthalat (PET), Polybutylenterphthalat (PBT) und Polyethylennaphthalat (PEN), das entweder als Homopolymer oder als Copolymer vorliegt und durch eine Polykondensationsreaktion aus seinen Monomeren, einer Diol-Komponente und einer Dikarbonsäure-Komponente, unter Abspaltung eines niedermolekularen Reaktionsproduktes gewonnen wird. Verschiedene, meist lineare oder zyklische Diol-Komponenten kommen zum Einsatz. Ebenso können verschiedene meist aromatische Dikarbonsäure-Komponenten zum Einsatz kommen. Anstelle der Dikarbonsäure kann auch ihr entsprechender Dimethylester eingesetzt werden. Dabei kann die Polykondensation direkt zwischen den Monomeren erfolgen oder über eine Zwischenstufe, die anschliessend durch Transesterifikation umgesetzt wird, wobei die Transesterifikation wiederum unter Abspaltung eines niedermolekularen Reaktionsproduktes oder durch Ringöffnungspolymerisation erfolgen kann. Im wesentlichen ist das so gewonnene Polyester linear, wobei eine geringe Anzahl an Verzweigungen entstehen kann.

Bei dem Polyester kann es sich um ein Neumaterial, ein Rezyklat oder ein Gemisch aus Neumaterial und Rezyklat handeln.

Dem Polyester können Additive zugegeben werden. Als Additive eignen sich zum Beispiel Katalysatoren, Farbstoffe und Pigmente, UV Blocker, Verarbeitungshilfsmittel, Stabilisatoren, Schlagzähmodifikatoren, Schäummittel chemischer und physikalischer Art, Füllstoffe wie zum Beispiel Nukleierungsmittel, Barriere oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen usw.

### Polyethylenterephthalat

Bei Polyethylenterephthalat handelt es sich um ein kristallisierbares, thermoplastisches Polyester, das durch eine Polykondensationsreaktion unter Abspaltung niedermolekularer Reaktionsprodukte gewonnen wird. Dabei kann die Polykondensation direkt zwischen den Monomeren erfolgen oder über eine Zwischenstufe, die anschliessend durch Transesterifikation umgesetzt wird, wobei die Transesterifikation wiederum unter Abspaltung eines niedermolekularen Reaktionsproduktes erfolgt. Im wesentlichen ist das so gewonnene Polyester linear, wobei eine geringe Anzahl an Verzweigungen entstehen kann.

Das Polyethylenterephthalat wird aus seinen Monomeren, einer Diol-Komponente und einer Dikarbonsäure-Komponente, gewonnen, wobei die Diol-Komponenten zum Grossteil aus Ethylenglykol (1,2 Ethandiol) und die Dikarbonsäure-Komponenten zum Grossteil aus Terephthalsäure besteht. Als Comonomere kommen weitere lineare, zyklische oder aromatische Diol- und Dikarbonsäureverbindungen in Frage. Typische Comonomere sind Diethylenglykol (DEG), Isopthalsäure (IPA) oder 1,4-Bis-hydroxymethylcyclohexan (CHDM).

### Polyesterprepolymer

Die Polyestermonomere werden in einem ersten Schritt in flüssiger Phase zu einem Prepolymer polymerisiert bzw. polykondensiert. Üblicherweise erfolgt die Herstellung der so gewonnenen Polyesterprepolymerschmelze in einem kontinuierlichen Prozess.

Dabei findet üblicherweise zunächst eine Veresterungsstufe und dann eine Prepolykondensationsstufe statt. Im konventionellen Polyesterherstellprozess folgt eine Polykondensationsstufe im Hochviskositätsreaktor (auch Finisher genannt). (Vergleiche zum Beispiel: Modern Polyesters, Wiley Series in Polymer Science, Edited by John Scheirs, J. Wiley & Sons Ltd, 2003; Kapitel 4.2). Die Polyesterherstellung kann auch in einem Batch-Prozess erfolgen (Vergleiche zum Beispiel: Modern Polyesters, Wiley Series in Polymer Science, Edited by John Scheirs, J. Wiley & Sons Ltd, 2003; Kapitel 4.1)

Alternativ kann die oben erwähnte Polykondensationsstufe im Hochviskositätsreaktor weggelassen werden. Dadurch entsteht ein niedrigviskoses Polyesterprepolymer mit einem Polymerisationsgrad (DP), der deutlich unter dem Polymerisationsgrad des Polyesters nach der nachfolgenden Festphasenbehandlung liegt. Üblicherweise liegt der Polymerisationsgrad des niedrigviskosen Prepolymers unter 60%, insbesondere unter 50% des Polymerisationsgrades des in der Festphase nachkondensierten Polyesters.

Eine weitere Alternative bietet das Verwenden bereits polykondensierter Polyester die in ihrer Rohform zum Beispiel als Flaschenschnitzel oder durch Aufschmelzen in einer homogenisierten Form vorliegen. Ebenso kann durch Aufschmelzen und Depolymerisieren ein bereits polykondensierter Polyester auf ein geeignetes Viskositätsniveau gebracht werden.

### Granulation

Das Verfestigen der Polyesterprepolymerschmelze erfolgt üblicherweise durch Granulation, obwohl auch alternative Verfestigungsmethoden zur Erzeugung fester Prepolymerpartikel einsetzbar sind, wie zum Beispiel Sinterung von Fäden, Schneiden von Folien oder Mahlen von abgekühlten Stücken.

Bei der Granulation wird die Prepolymerschmelze in eine definierte Form überführt und verfestigt. Dabei wird die Prepolymerschmelze zum Beispiel durch ein Düse mit einer Öffnung oder einer Vielzahl von Öffnungen gepresst und geschnitten oder vertropft.

Die Düsenöffnungen sind üblicherweise rund, können aber auch ein anderes Profil, wie zum Beispiel schlitzförmige Öffnungen darstellen. Das Schneiden kann sowohl direkt am Düsenaustritt erfolgen oder aber erst nach Durchlaufen einer Behandlungsstrecke.

Durch die Abkühlung wird die Prepolymerschmelze verfestigt. Dies kann mit Hilfe eines flüssigen Kühlmediums (z.B. Wasser, Ethylenglykol) oder gasförmigen Kühlmediums (z.B. Luft, Stickstoff, Wasserdampf) erfolgen, oder durch Kontakt mit einer kalten Oberfläche, wobei auch Kombinationen der Kühlmedien denkbar sind.

Die Abkühlung kann sowohl gleichzeitig, wie auch vor oder nach dem Formen zu Partikeln statt finden.

Liegt eine Prepolymerschmelze aus einem konventionellen Polyesterherstellprozess vor, so werden üblicherweise Granulationsprozesse wie Stranggranulation, Wasserringgranulation, Unterwassergranulation oder Kopfgranulation (auch hot face - Granulation) verwendet.

Liegt eine niederviskose Prepolymerschmelze vor, so werden üblicherweise Granulationsprozesse wie Vertropfung, Wasserringgranulation, Unterwassergranulation oder Kopfgranulation (auch hot face - Granulation) verwendet.

Die mittlere Granulatgrösse liegt üblicherweise zwischen 0.4mm und 10mm, bevorzugterweise zwischen 0.7mm und 3mm. Als mittlere Granulatgrösse gilt der statistische Mittelwert des mittleren Granulatdurchmessers, der sich aus dem Durchschnitt aus Granulathöhe, -länge und -breite ergibt.

Die Granulate können eine definierte Granulatform, wie zum Beispiel zylinderförmig, kugelförmig, tropfenförmig, kugelähnlich oder einer Design-Form, wie sie zum Beispiel in EP 0541 674 vorgeschlagen ist, aufweisen oder eine unregelmässig körnige Produktform, wie sie aus einem Mahlprozess oder Brechprozess entsteht, aufweisen.

Es können solide Granulate oder poröse Granulate, die zum Beispiel durch Sinterung, Schäumung und dergleichen gewonnen werden, verwendet werden.

### Festphasen-Polykondensation

Mit dem Begriff Festphasen-Polykondensation werden sämtliche Prozessschritte zusammengefasst, die notwendig sind, um aus dem verfestigten Prepolykondensat in fester Phase ein hochmolekulares Polyester herzustellen. Dazu gehören Schritte zum Aufheizen, zur Kristallisation, zur Reaktion und zum Abkühlen. Weitere Behandlungsschritte, wie z.B. die Behandlung mit Additiven können eingeschlossen sein.

Die Prozessschritte erfolgen in den jeweils für den Schritt geeigneten Apparaten. Es können aber auch mehrere Prozessschritte in einem Apparat gleichzeitig oder in mehreren Stufen durchgeführt werden. Ebenso können mehrere Apparate für einen Prozessschritt verwendet werden.

Die einzelnen Apparate sind dabei durch Fallrohre oder Förderleitungen miteinander verbunden. Zwischen den einzelnen Apparaten können sich Schleusen befinden, wie zum Beispiel Zellradschleusen oder alternierende Doppelschieber.

Erfindungsgemäss wird das Polyesterprepolymer dem Prozess "kalt" zugeführt, wie es zum Beispiel nach der Lagerung in einem Silo, Container oder Kleingebinde vorliegt. Das heisst, es wird nicht unter Erhaltung eines wesentlichen Anteils des Wärmeinhaltes aus einer vorhergehenden Prozessstufe in den Prozess geführt. Das Polykondensatprepolymer wird mit einer Umgebungstemperatur also unter 40°C, insbesondere zwischen -20 und 25°C dem Prozess zugeführt.

Während der Festphasenpolykondensation wird die Produkttemperatur um zumindest 160°C, insbesondere um zumindest 180°C erhöht, wodurch die Produkttemperatur auf zumindest 185°C, insbesondere zumindest 205°C angehoben wird.

Da die Energieeffizienz eines Prozesses mit zunehmender Durchsatzleistung gesteigert werden kann, sind Durchsatzleistungen zwischen 100 und 800 Tonnen pro Tag üblich, wobei auch noch höhere Durchsätze oder für Spezialanwendungen, wie technische Fasern oder Rezyklieranwendungen auch kleinere Durchsätze im Bereich 10 bis 100 Tonnen vorkommen können.

Trotz der Energievorteile, die sich ergeben, wenn sämtliche Prozessschritte übereinander angeordnet werden und das Produkt durch Gravitation von einer Prozessstufe zur nächsten geführt wird, so ist es besonders bei Anlagen mit hohen Durchsatzleistungen von Vorteil das Polykondensat im Verlaufe des Prozesses zumindest einmal mit einer Fördervorrichtung auf ein höheres Niveau anzuheben, um die Bauhöhe der Anlage zu begrenzen.

### Kristallisation

Das Anheben des Kristallisationsgrades der Prepolymergranulate erfolgt nach den im Stand der Technik bekannten Verfahren. Üblicherweise erfolgt die Kristallisation auf thermischen Weg, wodurch ein thermisch teilkristallisiertes Polyester entsteht. Ebenfalls denkbar, jedoch weniger geeignet, ist lösemittelinduzierte Kristallisation und Kristallisation durch mechanische Verstreckung.

Die Kristallisation kann in mehreren Stufen, sowohl vor, während als auch nach dem Granulationsschritt, statt finden. Dazu müssen die Prepolymergranulate bei einer geeigneten Kristallisationstemperatur behandelt werden.

Bei der Kristallisation soll zumindest ein Kristallisationsgrad erreicht werden, der eine Behandlung in der nachfolgenden Festphasen-Polykondensation erlaubt, ohne, dass es dort zu Verklebungen oder Klumpenbildungen kommt.

Der geeignete Temperaturbereich wird ersichtlich, wenn man die Kristallisationshalbwertszeit (t_{½}) gemessen im DSC als Funktion der Temperatur aufzeichnet. Er ist nach oben und unten begrenzt durch die Temperatur, bei der die Kristallisationshalbwertszeit das ungefähr 10-Fache der minimalen Kristallisationshalbwertszeit erreicht. Da sehr kurze Kristallisationshalbwertszeiten (t_{½}) nur schwer bestimmbar sind, wird als Minimalwert t_{½} = 1 Minute eingesetzt.

Bei Polyethylenterephthalat liegt der Temperaturbereich zwischen 100 und 220°C, und es wird ein Kristallisationsgrad von zumindest 20%, bevorzugterweise von zumindest 30% erreicht.

Erfindungsgemäss liegt die Temperatur der Prepolymergranulate nach dem Granulationsschritt unterhalb der geeigneten Kristallisationstemperatur. Somit müssen die Prepolymergranulate aufgeheizt werden. Dies kann zum Beispiel über eine beheizte Wand des Kristallisationsreaktors, über beheizte Einbauten im Kristallisationsreaktor, durch Strahlung oder durch das Einblasen eines heissen Prozessgases erfolgen.

Die geeignete Kristallisationszeit ergibt sich aus der Zeit, um das Produkt auf die Kristallisationstemperatur aufzuheizen, plus zumindest der Kristallisationshalbwertszeit bei der gegebenen Temperatur, wobei bevorzugterweise 2 - 20 Halbwertszeiten zur Aufheizzeit dazugezählt werden, um eine ausreichende Kristallisation zu erreichen.

Um ein Verkleben der kristallisierenden Prepolymergranulate zu verhindern, sollen diese relativ zueinander in Bewegung gehalten werden. Dies kann zum Beispiel durch den Einsatz eines Rührwerkes, eines bewegten Behälters oder unter Einwirkung eines Fluidisierungsgases erfolgen.

Besonders geeignete Kristallisationsreaktoren sind Fliessbett- oder Wirbelbettkristallisatoren, da diese nicht zur Staubbildung neigen.

Gleichzeitig mit dem Anheben des Kristallisationsgrades werden auch allfällige Reste einer Flüssigkeit aus dem Granulierprozess entfernt.

Wird im Kristallisationsprozess ein Prozessgas im Kreislauf verwendet, so muss diesem genügend Frischgas oder gereinigtes Prozessgas zugesetzt werden, um eine übermässige Anreicherung der Flüssigkeit zu verhindern. Die zur Festphasen-Polykondensation verwendeten Prozessgase können auch im Kristallisationsschritt eingesetzt werden, wobei in den unterschiedlichen Prozessstufen auch unterschiedliche Prozessgase zum Einsatz kommen können.

Gemäss einer Ausführung der vorliegenden Erfindung wird das Polykondensat vorgängig zur Kristallisation aufgeheizt, was durch Verwendung eines Prozessgasstroms, aus einem Schritt im weitern Verlauf der Festphasen-Polykondensation, erfolgt.

Besonders geeignet dazu ist ein Prozessgasstrom aus einem Schritt zur Kühlung des Polykondensates. Insbesondere bevorzugt ist ein Prozessgasstrom aus einem Schritt, der unter Luft erfolgt.

Das Aufheizen des Polykondensates soll auf eine Temperatur Tv erfolgen, die grösser als 50°C, insbesondere grösser als 75°C beträgt, wobei Tv bevorzugterweise im Bereich Tg -30°C bis Tg +30°C, insbesondere im Bereich Tg bis Tg +20°C liegt, wobei Tg die Glasübergangstemperatur des Polykondensates bezeichnet.

Das Aufheizen kann in einem beliebigen Reaktor erfolgen. Bevorzugt ist ein Apparat, in dem das Produkt bewegt wird, wie zum Beispiel ein gerührter oder bewegter Reaktor, ein Fliessbettapparat oder ein Wirbelbettapparat.

Besonders bevorzugt ist ein Apparat, der mit unterschiedlichen Gasdurchströmungsmengen und einem mg/mp-Verhältnis >2 betrieben werden kann, wodurch eine Regelung der Produktauslasstemperatur aus dem Aufheizschritt, auch bei Schwankungen der Temperatur des Prozessgasstroms, aus einem Schritt im weitern Verlauf der Festphasen-Polykondensation, über die Gasflussmenge erfolgen kann.

Das Aufheizen erfolgt bevorzugterweise mit einer mittleren Verweilzeit innerhalb weniger Minuten bis maximal einer Stunde, kann aber auch in einem Vorratsbehälter mit längerer Verweilzeit erfolgen, wenn Tv nicht mehr als eine Stunde, insbesondere 20 Minuten überschritten wird.

Gleichzeitig mit dem Aufheizen des Polykondensates erfolgt ein Trocknen des Polyesters, falls dies noch mit Feuchtigkeit oder einer anderen flüchtigen Substanz versetzt ist.

Dies erlaubt eine Reduktion flüchtiger Substanzen in späteren Prozessschritten, wodurch sich der Verunreinigungsgrad der zugehörigen Prozessgasströme verringert und somit eine Reduktion der Gasmenge, die gereinigt werden muss, erlaubt. Insbesondere erfolgt eine Trocknung eines von der Granulation her feuchten Polykondensates. Dazu werden die Prozessgasmenge und Temperatur so gewählt, dass eine Trocknung des Polykondensates auf einen Feuchtigkeitsgehalt zwischen 50ppm Wasser und 2000ppm Wasser, insbesondere zwischen 200ppm Wasser und 1000ppm Wasser erfolgt.

### Festphasen-Polykondensationsreaktion

Das Molekulargewicht der Polyestergranulate wird durch eine Festphasen-Polykondensationsreaktion unter Abspaltung von Polykondensationsspaltprodukten auf einen höheren Polymerisationsgrad gebracht.

Liegt ein Granulat aus einer Prepolymerschmelze aus einem konventionellen Herstellprozess vor, so wird der Polymerisationsgrad üblicherweise zwischen 10% und 70% angehoben, wobei ein Anstieg um zumindest 0,10dl/g bevorzugt ist.

Liegt ein Granulat aus einer niederviskosen Prepolymerschmelze vor, so wird der Polymerisationsgrad auf zumindest das 1,5-fache, insbesondere zumindest das 2-fache des Prepolymers angehoben.

Die Festphasen-Polykondensationsreaktion erfolgt nach den im Stand der Technik bekannten Verfahren und findet zumindest während des Schrittes des Aufheizens auf eine geeignete Nachkondensationstemperatur und während des Schrittes der Nachkondensationsreaktion statt. Dabei kommen im wesentlichen kontinuierliche Prozesse zum Einsatz, die zum Beispiel in Apparaturen wie Fliessbett-, Sprudelbett- oder Festbettreaktoren sowie in Reaktoren mit Rührwerkzeugen oder sich selber bewegenden Reaktoren, wie Drehrohrofen, statt finden. Die Festphasen-Polykondensationsreaktion kann sowohl bei Normaldruck, bei erhöhtem Druck oder unter Vakuum stattfinden.

Erfindungsgemäss werden die Polykondensationsspaltprodukte aus der Festphasen-Polykondensationsreaktion mittels eines Prozessgases (Schleppgas, carrier gas) entfernt. In kontinuierlichen Prozessen mit Prozessgas umströmt das Prozessgas dabei das Polykondensat im Gleich-, Gegen- oder Kreuzstrom. Die Schleppgasmenge muss ausreichend sein, um die an die Oberfläche der Partikel diffundierten Reaktionsprodukte und allfällige Kontaminanten, wie zum Beispiel Carbonylverbindungen aus dem Herstellprozess oder Verunreinigungen aus einem früheren Gebrauch, aus dem Reaktionsschritt auszutragen.

Erfolgt der Schritt des Aufheizens durch Einwirkung eines Prozessgases, so wird eine hohe spezifischen Gasmenge (mg/mp = 2 bis 20, insbesondere 5 bis 13) verwendet, wodurch sich im wesentlichen die Temperatur des Produktes an die Temperatur des Gases annähert.

Erfolgt der Schritt des Aufheizens durch andere Energieeinträge, wie zum Beispiel über eine beheizte Oberfläche, oder über eine Strahlung, so ist es trotzdem von Vorteil, wenn ein Prozessgas das Produkt durchströmt oder Vakuum anliegt.

Der Schritt der Nachkondensationsreaktion kann mit einer niedrigen spezifischen Gasmenge (mg/mp = 0.1 - 1.5 insbesondere 0.3 - 1.0) erfolgen, wodurch sich im wesentlichen die Temperatur des Gases an die Temperatur des Produktes annähert, was ermöglicht, das Prozessgas mit einer Temperatur, die unterhalb der Nachkondensationstemperatur liegt, dem Prozess zuzuführen.

Dabei ist mp die Summe der Masse aller dem Prozess zugeführter Produktströme, und mg die Summe der Masse aller dem Prozess zugeführter Gasströme.

Die Zirkulation der Prozessgase wird durch Gasverdichter, wie zum Beispiel Ventilatoren, Gebläse oder Kompressoren erreicht.

Als Prozessgas kommen Luft oder Inertgase, wie zum Beispiel Stickstoff oder CO₂, sowie Gemische aus Prozessgasen in Frage. Bevorzugterweise sollen die Inertgase weniger als 100ppm, insbesondere weniger als 10ppm Sauerstoff enthalten, wobei auch höhere Sauerstoffmengen denkbar sind, wenn die Behandlungstemperatur im Prozess ausreichend tief ist oder eine Möglichkeit besteht, zum Beispiel durch eine Verbrennung, Sauerstoff aus dem Prozess zu entfernen. Die Prozessgase können Additive enthalten, die entweder reaktiv auf das zu behandelnde Produkt einwirken oder sich passiv auf dem zu behandelnden Produkt ablagern.

Erfindungsgemäss wird das Prozessgas zumindest teilweise im Kreislauf geführt.

Um eine Beeinträchtigung der Polykondensationsreaktion zu vermindern, wird das Prozessgas von unerwünschten Produkten, insbesondere Spaltprodukten der Polykondensationsreaktionen gereinigt. Spaltprodukte wie Wasser, Ethylenglykol, Methyldioxolan oder Aldehyde (z.B. Acetaldehyd) sollen dabei auf Werte unter 100ppm, insbesondere auf Werte unter 10ppm reduziert werden. Zur Erzielung eines Gleichgewichtes kann es notwendig sein, eine Restmenge an Reaktionsprodukten im Prozessgas zu belassen. Gleichzeitig werden bei der Reinigung auch andere unerwünschte Produkte, wie zum Beispiel Verunreinigungen, die vom Polyester auf das Prozessgas übergehen, entfernt.

Erfindungsgemäss erfolgt die Reinigung durch im Stand der Technik bekannte Gaswaschsysteme, wobei weitere Reinigungsstufen, wie zum Beispiel, Filter, Demister (Tropfenabscheider), Adsorptionssysteme oder Kühlfallen, verwendet werden können. Das Gaswaschsystem wird mit einer wässrigen Waschflüssigkeit betrieben, wobei dem Wasser weitere Substanzen, wie zum Beispiel Tenside, Neutralisationsmittel oder Lösemittel zugesetzt werden können. Das Waschsystem kann mit einer oder mehreren Stufen mit einer gemeinsamen oder unterschiedlichen Waschflüssigkeiten betrieben werden. Das Gas kann dabei im Gleichstrom oder Gegenstrom zur Waschflüssigkeit fliessen. Die Waschflüssigkeit kann dabei in einem offenen System nur einmal verwendet werden oder in einem halboffenen oder geschlossenen System in einem Kreislauf oder in mehreren, unabhängigen oder gekoppelten Kreisläufen geführt werden. Um den Austausch zwischen Gas und Waschflüssigkeit zu verbessern, können Packungen eingesetzt werden, wie sie durch den Stand der Technik ausreichend bekannt sind. Bevorzugterweise werden die Waschflüssigkeiten zumindest Teilweise im Kreislauf geführt. Im Kreislauf können weitere Komponenten wie Pumpen, Filter, Überlaufbehälter oder Kühler eingesetzt werden.

Dem Waschsystem kann ein System zum Abscheiden von mitgerissenen Tröpfchen (Nebeln) wie zum Beispiel ein Demister (Tropfenabscheider) nachgeschaltet sein.

Um den Taupunkt des aus dem Waschprozess austretenden Prozessgases weiter zu senken kann ein Trockner, wie zum Beispiel ein Adsorptionstrockner eingesetzt werden.

Es ist von Vorteil, wenn das Prozessgas vor Eintritt in einen Adsorptionstrockner auf eine Temperatur unter 15°C, insbesondere unter 10°C abgekühlt wird. Dies kann entweder durch den Einsatz gekühlter Waschflüssigkeiten oder durch eine separate Kühleinrichtung, wie zum Beispiel eine Kühlfalle, erfolgen.

Im Adsorptionstrockner werden Wasser und allfällige flüchtige organische Komponenten, die nicht von der Waschflüssigkeit gelöst wurden, wie zum Beispiel Acetaldehyd oder Formaldehyd, adsorbiert. Bevorzugterweise wird eine parallele Ausführung von Adsorptionsbetten gewählt, so dass ein Bett regeneriert werden kann, während das andere im Einsatz ist. Bei der Regeneration werden Wasser und die organischen Komponenten wieder desorbiert, was zum Beispiel mittels eines Regenerationsgases erfolgt. Die Regeneration kann entweder in einem offenen Kreislauf, durch Abblasen des Regenerationsgases oder in einem geschlossenen Kreislauf erfolgen. Auch eine Kombination ist denkbar. Wird ein geschlossener Regenerationskreislauf verwendet, so müssen die desorbierten Stoffe aus dem Kreislauf entfernt werden. Dies geschieht vor allem für Wasser durch Kondensation. Die organischen Komponenten kondensieren entweder ebenfalls in ausreichendem Mass, oder sie müssen separat entfernt werden, was zum Beispiel durch eine Verbrennung erfolgen kann oder bei einem kombinierten System durch Abblasen von Regenerationsgas erfolgt.

Zur Entfernung von Sauerstoff kann eine Verbrennungsvorrichtung, wie zum Beispiel eine katalytische Verbrennungsvorrichtung, vorgesehen sein, in der der Sauerstoff zusammen mit einer geregelt zudosierten Menge an brennbaren Substanzen verbrannt wird.

Eine besondere Ausführung der vorliegenden Erfindung sieht vor, die Waschflüssigkeit anschliessend in einem Verfahrensschritt zur Aufbereitung gebrauchter Polyester, wie zum Beispiel Polyester-Flaschenschnitzel, zu verwenden.

Die geeignete Nachkondensationstemperatur liegt in einem Temperaturbereich von 185°C bis 240°C, wobei Temperaturen zwischen 190 und 220°C bevorzugt sind.

Die geeignete Nachkondensationszeit liegt im Bereich von 2 - 100 Stunden, wobei aus wirtschaftlichen Gründen Verweilzeiten von 6 - 30 Stunden bevorzugt sind.

Optional kann der Schritt zur Kristallisation und der Schritt des Aufheizens auf eine geeignete Nachkondensationstemperatur gleichzeitig oder zumindest im gleichen Reaktor erfolgen, wobei der dazu verwendete Reaktor in mehrere Prozesskammern getrennt sein kann, in denen unterschiedliche Prozessbedingungen (z.B. Temperatur und Verweilzeit) vorherrschen können.

### Spezifischer Energieeintrag

Der spezifische Energieeintrag ist die Summe aller thermischer und mechanischer Energie, die dem Prozess zugeführt wird bezogen auf die verarbeitete Produktmenge. Als Grenzen des Prozesses gelten der Produkteintritt in den Prozess, vor dem ersten Behandlungsschritt, bis zum Produktaustritt aus dem Prozess, nach dem letzten Behandlungsschritt, wobei das Produkt mit Umgebungstemperatur, also maximal 40°C, üblicherweise 0 bis 25°C in den Prozess eintritt. Ein allfälliger Schritt zum Vorheizen des Produktes ist somit Bestandteil des Prozesses. Zum Prozess gehören alle Verfahrensstufen, in denen das Produkt behandelt wird. Zum Prozess gehören ausserdem alle Gasströme oder Flüssigkeitsströme, die zum direkten oder indirekten Energieeintrag auf das Produkt verwendet werden.

Zum Prozess gehören somit Verfahrenstufen, in denen das Produkt erwärmt, kristallisiert, gerührt, mit Schleppgas oder unter Vakuum behandelt, gekühlt, bewegt, gemischt oder gefördert wird.

Zu einem Verfahrensschritt, in dem das Produkt durch eine heisse Oberfläche erwärmt wird, gehört somit die Energie, die benötigt wird, um die Oberfläche zu erwärmen. Wird die Oberfläche mittels eines Fluides erwärmt, werden Energieeinträge zur Umwälzung des Fluides, wie auch zur Erhitzung des Fluides berücksichtigt.

Zu einem Verfahrensschritt, in dem das Produkt durch eine Strahlung behandelt, insbesondere erwärmt wird, gehört somit die Energie, die benötigt wird, um die Strahlung, wie zum Beispiel Mikrowellenstrahlung oder Infrarotstrahlung, zu erzeugen.

Zu einem Verfahrensschritt, in dem das Produkt bewegt wird, gehört somit die Energie, mit der das Produkt bewegt wird, wie zum Beispiel Antriebe für Rührwerke, Schleusen oder Schneckenförderer, oder Antriebe zur Bewegung eines Behandlungsapparates oder eines Teiles eines Behandlungsapparates, wie zum Beispiel Drehrohrofen oder vibrierende Siebe.

Ebenso berücksichtigt werden Energieeinträge zur Umwälzung und allfälligen Erhitzung eines Fluides, mit dessen Hilfe das Produkt bewegt wird, wie zum Beispiel Prozessgase, die in Fliessbett- oder Sprudelbettapparaten oder in pneumatischen Fördereinrichtungen verwendet werden.

Zu einem Verfahrensschritt, in dem das Produkt durch ein Fluid, wie zum Beispiel ein Prozessgas behandelt wird, gehören somit die Energieträger, die benötigt werden, um das Fluid umzuwälzen und wenn nötig zu erwärmen. Wird das Fluid im Kreislauf geführt oder zumindest teilweise im Kreislauf geführt, werden Energieeinträge, die zur Reinigung des Fluides benötigt werden, berücksichtigt.

Energieeinträge, die zur Reinigung des Fluides benötigt werden, beinhalten Energieeinträge die benötigt werden, um zum Beispiel eine Waschflüssigkeit umzuwälzen, eine Adsorptionsvorrichtung zu regenerieren oder eine Verbrennung zu betreiben.

Nicht berücksichtigt werden Energieeinträge zur Erzeugung und Umwälzung der Energieträger (=Utilities), wenn diese nicht direkt an das Produkt abgegeben werden.

Als Energieträger gelten: Elektrischer Strom, Kühlwasser, Druckluft, Wärmeträger, wie Dampf, oder Wärmeträgeröle oder Prozessgase, wie Stickstoff, CO₂ oder spezielle Gasgemische.

Nicht berücksichtigt werden zum Beispiel:
➢ Energieeinträge zur Umwälzung von Kühlwasser oder Eiswasser, mit denen ein Prozessgasstrom indirekt abgekühlt wird.
➢ Energieeinträge zur Erzeugung von Kühlwasser oder Eiswasser.
➢ Energieeinträge zur Erzeugung von Druckluft für die Prozessregelung.
➢ Energieeinträge zur Erzeugung von Stickstoff oder anderer Prozessgase.
➢ Energieeinträge zur Umwälzung von Wärmeträgern, mit denen ein Prozessgasstrom indirekt aufgeheizt wird.
➢ Energieeinträge zur Erzeugung oder Verteilung von elektrischem Strom.

Nicht berücksichtigt werden ausserdem Energieeinträge zur Aufbereitung von Abwasserströmen oder Waschflüssigkeiten.

### Verfahren

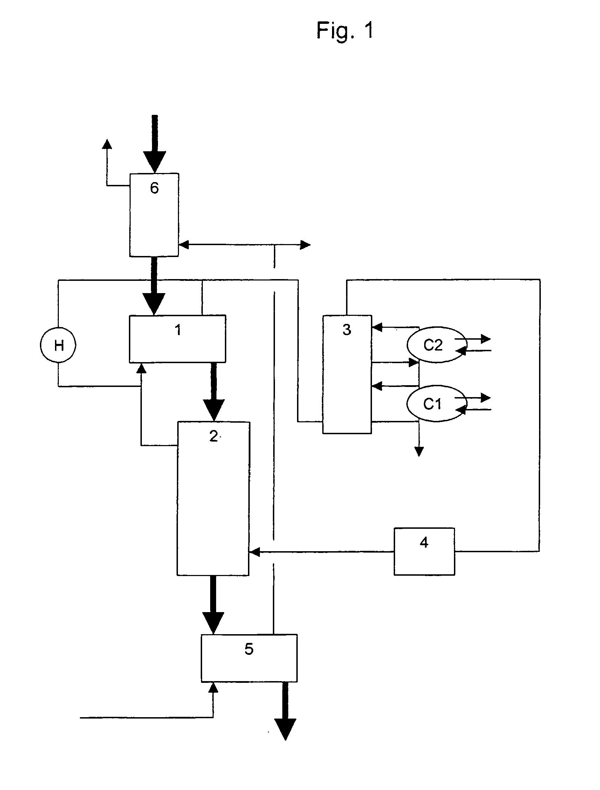

Die Ausführung gemäss Figur 1 sieht vor, dass ein im wesentlichen amorphes Polykondensatprepolymer kontinuierlich einer Aufheiz- und Kristallisationsvorrichtung (1) zugeführt wird und danach in einen Reaktionsraum (2) überführt wird.

Die Behandlung in der Kristallisationsvorrichtung erfolgt mittels eines zumindest teilweise im Kreislauf geführten Prozessgases, das mittels eines Erhitzers (H) aufgeheizt wird. Schleppgas, welches das Polykondensat im Reaktionsraum durchströmt, wird dem Prozessgas des Kristallisationskreislaufes als Austauschgas zugeführt. Dadurch muss eine Prozessgasmenge aus dem Kristallisationskreislauf weggeführt werden, die anschliessend gereinigt werden muss.

Das verschmutzte Prozessgas wird zur Reinigung durch einen Gaswäscher (3) mit Wasser als Waschflüssigkeit geführt, anschliessend in einem Trockner (4) getrocknet und ohne wesentliches Aufheizen in den Reaktor zurückgeführt.

Eine Variante sieht vor, dass das Prozessgas aus dem Reaktor und ein Teil des Prozessgases aus dem Kristallisationskreislauf miteinander vermischt werden. Ein Teil des vermischten Prozessgases wird gereinigt, getrocknet und in den Reaktor zurückgeführt.

Ein weiterer Teil des vermischten Prozessgases wird entweder direkt oder nach Durchlaufen des Wäschers in den Kristallisationskreislauf zurückgeführt.

Optional erfolgen weitere Reinigungsstufen zum Beispiel durch den Einsatz von Zyklonen oder Filtern.

Die Waschflüssigkeit wird in zwei geschlossenen Systemen mittels Kühlern (C1, C2) gekühlt und im Kreislauf geführt. Der Überlauf an verunreinigter Waschflüssigkeit lässt sich gemäss einer bevorzugten Ausführung der Erfindung in einem Prozessschritt zur Aufbereitung von Polykondensatabfällen, wie zum Beispiel PET-Flaschenschnitzeln, verwenden. Wenn nötig, kann eine Anpassung des pH-Wertes der Waschflüssigkeit, wie zum Beispiel eine Neutralisation, vorgenommen werden. Der Waschflüssigkeit können weitere Zusätze, wie zum Beispiel Tenside zugegeben werden.

Als Prozessgas wird ein Inertgas verwendet. Das Inertgas wird in ausreichendem Mass zugegeben, um Verluste auszugleichen, die über die Materialzufuhrleitung in den Inertgasbereich und die Materialwegfuhrleitung aus dem Inertgasbereich erfolgen, sowie allfällige andere Verlustpunkte auszugleichen. Um den Inertgasverlust zu minimieren, erfolgen die Materialzufuhr und die Materialwegfuhr mittels einer Schleuse, insbesondere mittels einer Zellradschleuse.

Optional können auch zwischen Apparaten innerhalb des Inertgasbereichs oder ausserhalb des Inertgasbereichs Schleusen angeordnet sein.

Zur optimalen Raum- und Energieausnutzung soll der Kristallisationsschritt über dem Reaktionsschritt erfolgen, um einen Produkttransfer durch Gravitation zu ermöglichen.

Eine weitere Option sieht vor, dass das Polykondensat mittels einer Fördervorrichtung, wie zum Beispiel durch eine pneumatische Förderung, transferiert wird.

Im Anschluss an den Reaktionsschritt kann optional ein Kühlschritt (5), bevorzugterweise unter Luft erfolgen. Prozessgas aus dem Kühlschritt kann in einem ebenfalls optionalen, vor dem Kristallisationsschritt erfolgenden Aufheizschritt (6) verwendet werden.

Über optional eingesetzte Ventile kann die Prozessgasmenge zum Aufheizschritt eingestellt oder geregelt werden.

Weitere Vorteile, Merkmale und Anwendungsmöglichkeiten der Erfindung ergeben sich aus der nun folgenden Beschreibung nicht einschränkend aufzufassender erfindungsgemässer Beispiele anhand der Zeichnung.

### Beispiel 1

Ein regranuliertes Polyethylenterephthalat wird mit einer Eintrittstemperatur von 10°C einem Prozess gemäss Figur 1 bestehend aus den Apparaten 1, 2, 3, 4, 5, 6, H, C1 und C2 zugeführt. Die Durchsatzleistung beträgt 1 Tonne pro Stunde.
Im Kristallisator 1 wird das Produkt auf 192 °C aufgeheizt und die Kristallinität um 35% angehoben.
Im Reaktor 2 wird die intrinsische Viskosität von 0.72 auf 0.84 angehoben.
Im Kreislauf zum Kristallisator 1 werden 9 Tonnen pro Stunde Stickstoff zirkuliert, der kontinuierlich auf 202°C erwärmt wird.
Dem Reaktor 2 werden 0.6 Tonnen pro Stunde gereinigter Stickstoff zugeführt, der kontinuierlich auf 50°C erwärmt wird.
Die Kühlung erfolgt mit 2.5 Tonnen pro Stunde Luft.
Die Reinigung des Stickstoffs erfolgt über einen 2-stufigen Gaswäscher und einen Adsorptionstrockner, der mit aufgeheiztem Prozessgas regeneriert wird.
Im Gaswäscher werden 5 Tonnen pro Stunde respektive 1 Tonne pro Stunde Waschflüssigkeit umgewälzt.
Vor dem Kristallisator 1, vor dem Reaktor 2 und nach dem Reaktor 2 wird jeweils eine Schleuse (nicht gezeigt) eingesetzt.

Insgesamt werden dem Prozess 44 kWh an Energie für Motoren und 72 kWh an Energie für Erhitzer zugeführt, was einem Gesamtverbrauch von 116kWh/Tonne entspricht.

Hierbei sind Wärmeverluste aus den Apparaten sowie Produkt- und Prozessgasleitungen eingerechnet. Alle Apparate sind isoliert, um deren Oberflächentemperatur unter 50°C zu halten.

### Beispiel 2

In diesem Beispiel wird die Anlage aus Beispiel 1 um eine Produktförderung zwischen dem Kristallisator 1 und dem Reaktor 2 erweitert. So werden zusätzlich 6kWh für die Förderenergie und die Kompensation von Wärmeverlusten über die Förderstrecke gebraucht, was einem Gesamtverbrauch von 122kWh/Tonne entspricht.

### Beispiel 3

In diesem Beispiel wird die Anlage aus Beispiel 2 so betrieben, dass das Produkt Im Kristallisator 1 auf 210 °C aufgeheizt wird, wodurch die intrinsische Viskosität auf über 0.9 angehoben wird. Dadurch werden zusätzlich 13kWh für die Aufheizleistung gebraucht, was einem Gesamtverbrauch von 135kWh/Tonne entspricht.

### Beispiel 4

In diesem Beispiel wird die Anlage aus Beispiel 1 um einen Aufheizapparat 6 vor dem Kristallisator 1 ergänzt, durch den 100% der Luft aus dem Kühler fliessen, was zu einer Erhöhung der Produkttemperatur am Eintritt des Kristallisators 1 auf 60°C führt. Dadurch erhöht sich die Energie für Motoren auf 47 kWh und reduziert sich die Energie für Erhitzer auf 54 kWh, was einem Gesamtverbrauch von 101 kWh/Tonne entspricht.

## Patentansprüche

1. Verfahren zur Herstellung eines hochmolekularen Polyesters aus einem verfestigten Polyesterprepolymeren durch Festphasen-Polykondensation, wobei die Polykondensationsspaltprodukte aus der Festphasen-Polykondensationsreaktion mittels eines Prozessgases vom Produkt entfernt werden und das Prozessgas anschliessend von den Polykondensations-Spaltprodukten gereinigt und im wesentlichen rezykliert wird, **dadurch gekennzeichnet, dass** die Reinigung des Prozessgases mittels einer wässrigen Waschflüssigkeit erfolgt.

2. Verfahren gemäss Anspruch 1, **dadurch gekennzeichnet, dass** der spezifische Energieeintrag bei einer Durchsatzleistung zwischen 10 und 60 Tonnen pro Tag weniger als 145kWh/t, insbesondere weniger als 130 kWh/t beträgt oder, dass der spezifische Energieeintrag bei einer Durchsatzleistung grösser als 60 Tonnen pro Tag weniger als 140kWh/t, insbesondere weniger als 125 kWh/t beträgt.

3. Verfahren gemäss einem der vorhergehenden Ansprüche, **gekennzeichnet durch** mindestens eines der folgenden Merkmale:
➢ dass der Prozess kontinuierlich durchgeführt wird;
➢ dass das Polyesterprepolymer mit einer Umgebungstemperatur, also unter 40°C, insbesondere zwischen 0 und 25°C dem Prozess zugeführt wird;
➢ dass das Polyesterprepolymer im wesentlichen im amorphen Zustand, bevorzugterweise unter 10% Kristallinität dem Prozess zugeführt wird;
➢ dass eine Kristallinitätserhöhung um zumindest 20%, insbesondere um zumindest 30% erfolgt;
➢ dass die Produkttemperatur auf zumindest 185°C, insbesondere zumindest 205°C angehoben wird;
➢ dass eine Produkttemperaturerhöhung um zumindest 160°C, insbesondere um zumindest 180°C erfolgt;
➢ dass das Polykondensat im Verlaufe des Prozesses zumindest einmal mit einer Fördervorrichtung auf ein höheres Niveau angehoben wird;
➢ dass es sich beim Prozessgas um ein Inertgas, wie zum Beispiel Stickstoff oder CO₂ handelt;
➢ dass das mittels einer wässrigen Waschflüssigkeit gereinigte Prozessgas anschliessend getrocknet wird.

4. Verfahren gemäss einem der vorhergehenden Ansprüche, **dadurch gekennzeichnet, dass** es sich bei dem Polyester zum Beispiel um Polyethylenterephthalat (PET), Polybutylenterephthalat (PBT) und Polyethylennaphthalat (PEN) oder eines ihrer Copolymere, insbesondere um ein Polyethylenterephthalat oder eines seiner Copolymere handelt und das Polyester entweder als Neumaterial, als Rezyklat oder als Gemisch vorliegt.

5. Verfahren gemäss einem der vorhergehenden Ansprüche, **dadurch gekennzeichnet, dass** die Prozessgasmenge, die gereinigt wird, im Verhältnis zur Produktmenge zwischen 0.1 und 1.5, insbesondere zwischen 0.3 und 1.0 beträgt.

6. Verfahren gemäss einem der vorhergehenden Ansprüche, mit zumindest einem Schritt zur Kristallisation und zumindest einem Schritt zur Festphasen-Polykondensationsreaktion (SSP-Reaktion), **dadurch gekennzeichnet, dass** jeder Schritt einen zugeordneten Prozessgasstrom aufweist.

7. Verfahren gemäss Anspruch 6, **dadurch gekennzeichnet, dass** die Prozessgasströme miteinander verbunden sind und dass das Prozessgas von flüchtigen Substanzen, die im Kristallisationskreislauf vom Produkt auf das Prozessgas übergehen, gereinigt wird.

8. Verfahren gemäss Ansprüche 7 bis 8, **dadurch gekennzeichnet, dass** weitere Schritte zur Produkterwärmung, Produkttrocknung, Kristallisation, SSP-Reaktion oder Produktkühlung beinhaltet sind.

9. Verfahren zur Herstellung eines hochmolekularen Polyesters aus einem verfestigten Polyesterprepolymeren durch Festphasen-Polykondensation gemäss einem der vorhergehenden Ansprüche, mit mindestens einem Schritt zum Aufheizen des Polyesters, danach mindestens einem Schritt zur Kristallisation, mindestens einem Schritt zur Festphasen-Polykondensationsreaktion und mindestens einem Schritt zur Kühlung, wobei zumindest ein Schritt zum Aufheizen und ein weiterer Schritt unter Einwirkung eines Prozessgases erfolgt, **dadurch gekennzeichnet, dass** zumindest ein Teil des Prozessgases aus diesem weiteren Schritt verwendet wird, um das Polyester im Schritt des Aufheizens vor der Kristallisation aufzuheizen.

10. Verfahren gemäss Anspruch 9, **dadurch gekennzeichnet, dass** das Prozessgas aus einem Schritt zur Kühlung verwendet wird, um den Polyester im Schritt des Aufheizens vor der Kristallisation aufzuheizen.

11. Verfahren gemäss einem der vorhergehenden Ansprüche, **dadurch gekennzeichnet, dass** vor einem ersten Schritt zur Kristallisation ein Schritt zum Aufheizen des Polyesters auf eine Temperatur Tv erfolgt, wobei Tv grösser als 50°C insbesondere grösser als 75°C beträgt.

12. Verfahren gemäss einem der vorhergehenden Ansprüche, **dadurch gekennzeichnet, dass** Tv im Bereich Tg -30°C bis Tg +30°C, insbesondere im Bereich Tg bis Tg +20°C liegt, wobei Tg die im DSC gemessene Glasübergangstemperatur des Polyesters bezeichnet.

13. Verfahren gemäss einem der vorhergehenden Ansprüche, **dadurch gekennzeichnet, dass** der Schritt zum Aufheizen in einem Fliessbettapparat oder Wirbelbettapparat erfolgt.

14. Verfahren gemäss einem der vorhergehenden Ansprüche, **dadurch gekennzeichnet, dass** im Schritt zum Aufheizen eine Trocknung des Polykondensates auf einen Feuchtigkeitsgehalt zwischen 50ppm Wasser und 2000ppm Wasser, insbesondere zwischen 200ppm Wasser und 1000ppm Wasser erfolgt.

15. Verfahren gemäss einem der vorhergehenden Ansprüche, **dadurch gekennzeichnet, dass** die Waschflüssigkeit anschliessend in einem Verfahrensschritt zur Aufbereitung gebrauchter Polykondensate, wie zum Beispiel Polyester-Flaschenschnitzel, verwendet wird.

16. Verfahren gemäss einem der Ansprüche 9 bis 15, **dadurch gekennzeichnet, dass** der spezifische Energieeintrag weniger als 120kWh/t, insbesondere zwischen 80 und 110 kWh/t beträgt.

17. Anlage zur Herstellung eines hochmolekularen Polyesters, mit zumindest einem Kristallisationsapparat (1) und einem Reaktionsapparat (2), die jeweils Produkteinlassöffnungen (1a, 2a) und Produktauslassöffnungen (1b, 2b) sowie Gaseinlassöffnungen (1c, 2c) und Gasauslassöffnungen (1d, 2d) aufweisen, **dadurch gekennzeichnet, dass** eine Gasauslassöffnung (2d) des Reaktionsapparats (2) direkt oder indirekt mit einer Gaseinlassöffnung (3c) in ein Gasreinigungssystem (3) und eine Gasauslassöffnung (3d) aus dem Gasreinigungssystem (3) mit einer Gaseintrittsöffnung (2c) des Reaktionsapparats (2) verbunden ist und das Gasreinigungssystem (3) eine Gaswaschapparatur, der eine wässrige Waschflüssigkeit zugeführt wird, sowie eine nachgeschaltete Gastrocknungsapparatur (4) aufweist.

18. Anlage gemäss Anspruch 17, **dadurch gekennzeichnet, dass** die Gasauslassöffnung (2d) des Reaktionsapparats (2) mit einer Gaseinlassöffnung (1c) des Kristallisationsapparats (1) verbunden ist und dass die Gasaustrittsöffnung (1 d) des Kristallisationsapparats (1) mit der Gaseinlassöffnung (3c) in das Gasreinigungssystem (3) und die Gasauslassöffnung (3d) aus dem Gasreinigungssystem (3) mit der Gaseintrittsöffnung des Reaktionsapparats verbunden ist.

19. Anlage gemäss einem der Ansprüche 17 oder 18, mit zumindest einem Aufheizapparat (6), gefolgt von einem Kristallisationsapparat (1), einem Reaktionsapparat (2) und einem Kühlapparat (5), wobei der Kühlapparat (5) und der Aufheizapparat (6) jeweils Produkteinlassöffnungen (5a, 6a) und Produktauslassöffnungen (5b, 6b) sowie Gaseinlassöffnungen (5c, 6c) und Gasauslassöffnungen (5d, 6d) aufweisen, **dadurch gekennzeichnet, dass** eine Gasauslassöffnung (5d) des Kühlapparats (5) mit einer Gaseinlassöffnung (6c) des Aufheizapparats (6) verbunden ist.

20. Anlage gemäss einem der Ansprüche 17 bis 19, zur Durchführung eines Verfahrens gemäss einem der Ansprüche 1 bis 16.

## Claims

1. A method for manufacturing a high-molecular polyester out of a solidified polyester prepolymer via solid-phase polycondensation, wherein the polycondensation cleavage products from the solid-phase polycondensation reaction are removed from the product by means of a process gas, and the process gas is subsequently cleaned to remove the polycondensation cleavage products and essentially recycled, **characterized in that** the process gas is cleaned using an aqueous washing liquid.

2. The method according to claim 1, **characterized in that** the specific energy introduced at a throughput of between 10 and 60 tons per day measures less than 145 kWh/t, in particular less than 130 kWh/t, or that the specific energy introduced at a throughput of greater than 60 tons per day measures less than 140 kWh/t, in particular less than 125 kWh/t.

3. The method according to one of the preceding claims, **characterized by** at least one of the following features:
- the process is continuously executed;
- the polymer is introduced to the process at an ambient temperature, meaning at under 40°C, in particular at between 0 and 25°C;
- the polyester prepolymer is introduced to the process in essentially an amorphous state, preferably under 10% crystallinity;
- crystallinity is increased by at least 20%, in particular by at least 30%;
- the product temperature is raised to at least 185°C, in particular to at least 205°C;
- product temperature is increased by at least 160°C, in particular by at least 180°C;
- the polycondensate is raised to a higher level at least once with a conveying device during the course of the process;
- the process gas is an inert gas, for example nitrogen or CO₂;
- the process gas cleaned with an aqueous washing liquid is subsequently dried.

4. The method according to one of the preceding claims, **characterized in that** the polyester can be a polyethylene terephthalate (PET), polybutylene terephthalate (PBT) and polyethylene naphthalate (PEN) or a copolymer thereof, in particular a polyethylene terephthalate or one of its copolymers, and the polyester is present either as a new material, recyclate or mixture.

5. The method according to one of the preceding claims, **characterized in that** the quantity of process gas that is cleaned ranges between 0.1 and 1.5, in particular 0.3 and 1.0, relative to the quantity of product.

6. The method according to one of the preceding claims, with at least one crystallization step and at least one solid-phase polycondensation reaction (SSP-reaction) step, **characterized in that** each step exhibits an allocated process gas stream.

7. The method according to claim 6, **characterized in that** the process gas streams are interconnected, and that the process gas is cleaned to remove volatile substances that pass from the product to the process gas in the crystallizing circulation.

8. The method according to claims 7 to 8, **characterized in that** there are additional steps for product heating, product drying, crystallization, SSP reaction or product cooling.

9. The method for manufacturing a high-molecular polyester out of a solidified polyester prepolymer via solid-phase polycondensation according to one of the preceding claims, with at least one step for heating the polyester, followed by at least one step for crystallization, at least one solid-phase polycondensation reaction step and at least one cooling step, wherein at least one heating step and one additional step involving exposure to a process gas take place, **characterized in that** at least a portion of the process gas from this additional step is used to heat up the polyester during the step of heating prior to crystallization.

10. The method according to claim 9, **characterized in that** the process gas from a cooling step is used to heat the polyester in the heating step prior to crystallization.

11. The method according to one of the preceding claims, **characterized in that** a first crystallization step is preceding by a step for heating the polyester to a temperature Tv, wherein Tv is greater than 50°C, in particular greater than 75°C.

12. The method according to one of the preceding claims, **characterized in that** Tv ranges from Tg-30°C to tg+30°C, in particular from Tg to Tg+20°C, wherein Tg denotes the glass transition temperature of the polyester measured in the DSC.

13. The method according to one of the preceding claims, **characterized in that** the heating step takes place in a fixed bed or fluidized bed apparatus.

14. The method according to one of the preceding claims, **characterized in that** the heating step is accompanied by a drying of the polycondensate to a moisture content of between 50 ppm water and 2000 ppm water, in particular between 200 ppm water and 1000 ppm water.

15. The method according to one of the preceding claims, **characterized in that** the washing liquid is subsequently used in a procedural step to prepare consumed polycondensates, for example polyester bottle shreds.

16. The method according to one of claims 9 to 15, **characterized in that** the specific energy introduced measures less than 120kWh/t, in particular between 80 and 110 kWh/t.

17. A system for manufacturing a high-molecular polymer, with at least one crystallization apparatus (1) and a reaction apparatus (2), which each exhibit product inlet openings (1a, 2a) and product outlet openings (1b, 2b), as well as gas inlet openings (1 c, 2c) and gas outlet openings (1d, 2d), **characterized in that** one gas outlet opening (2d) of the reaction apparatus (2) is directly or indirectly connected with a gas inlet opening (3c) in a gas washing system (3), and one gas outlet opening (3d) from the gas washing system (3) is connected with a gas inlet opening (2c) of the reaction apparatus (2), and that the gas cleaning system (3) exhibits a gas scrubbing apparatus that receives an aqueous washing liquid, as well as a downstream gas drying apparatus (4).

18. The system according to claim 17, **characterized in that** the gas outlet opening (2d) of the reaction apparatus (2) is connected with a gas inlet opening (1 c) of the crystallization apparatus (1), and that the gas outlet opening (1 d) of the crystallization apparatus (1) is connected with the gas inlet opening (3c) in the gas cleaning system (3) and the gas outlet opening (3d) from the gas cleaning system (3) is connected with the gas inlet opening of the reaction apparatus.

19. The system according to one of claims 17 or 18, with at least one heating apparatus (6), followed by a crystallization apparatus (1), a reaction apparatus (2) and a cooling apparatus (5), wherein the cooling apparatus (5) and heating apparatus (6) each exhibit product inlet openings (5a, 6a) and product outlet openings (5b, 6b), as well as gas inlet openings (5c, 6c) and gas outlet openings (5d, 6d), **characterized in that** a gas outlet opening (5d) of the cooling apparatus (5) is connected with a gas inlet opening (6c) of the heating apparatus (6).

20. The system according to one of claims 17 to 19 for implementing a method according to one of claims 1 to 16.

## Revendications

1. Procédé de préparation d'un polyester à masse moléculaire élevée par polycondensation en phase solide à partir d'un prépolymère de polyester solidifié, les composés libérés lors de la polycondensation étant éliminés du produit, au cours de la réaction de polycondensation en phase solide, au moyen d'un gaz de procédé, ledit gaz de procédé étant ensuite purifié en enlevant les composés libérés lors de la polycondensation pour être essentiellement recyclé, **caractérisé en ce que** la purification du gaz de procédé est réalisée au moyen d'un liquide de lavage aqueux.

2. Procédé selon la revendication 1, **caractérisé en ce que** l'apport spécifique en énergie est inférieur à 145 kWh/t, notamment inférieur à 130 kWh/t, le débit étant compris entre 10 et 60 tonnes par jour, ou que l'apport spécifique en énergie est inférieur à 140 kWh/t, notamment inférieur à 125 kWh/t, le débit étant supérieur à 60 tonnes par jour.

3. Procédé selon l'une des revendications précédentes, **caractérisé par** au moins une des spécifications suivantes :
- que le processus est réalisé de manière continue ;
- que le prépolymère de polyester est introduit dans le processus à une température ambiante donc inférieure à 40 °C, cette dernière étant notamment comprise entre 0 et 25 °C ;
- que le prépolymère de polyester se trouve essentiellement à l'état amorphe lorsqu'il est introduit dans le processus, la cristallinité étant de préférence de moins de 10 % ;
- que la cristallinité est augmentée d'au moins 20 %, notamment d'au moins 30 % ;
- que la température du produit est relevée au moins à une valeur de 185 °C, notamment au moins à une valeur de 205 °C;
- que la température du produit est augmentée au moins de 160 °C, notamment au moins de 180°C ;
- que le polycondensat est transporté au cours du processus au moins une fois à un niveau supérieur au moyen d'un dispositif de transport ;
- que le gaz de procédé est un gaz inerte comme, par exemple, l'azote ou le CO₂;
- que le gaz de procédé purifié au moyen d'un liquide de lavage aqueux est ensuite séché.

4. Procédé selon l'une des revendications précédentes, **caractérisé en ce qu'**il s'agit, en ce qui concerne le polyester, par exemple de polyéthylènetéréphtalate (PET), de polybutylènetéréphtalate (PBT) et de polyéthylènenaphtalate (PEN) ou d'un de leurs copolymères, notamment de polyéthylènetéréphtalate ou d'un de ses copolymères, et que ledit polyester est mis en oeuvre sous forme de matière vierge, recyclée ou mélangée.

5. Procédé selon l'une des revendications précédentes, **caractérisé en ce que** la quantité de gaz de procédé qui est soumise à la purification est comprise entre 0,1 et 1,5, notamment entre 0,3 et 1,0, par rapport à la quantité de produit.

6. Procédé selon l'une des revendications précédentes avec au moins une étape de cristallisation et au moins une étape de réaction de polycondensation en phase solide (réaction PPS), **caractérisé en ce que** chacune des étapes présente un débit de gaz de procédé qui lui est attribué.

7. Procédé selon la revendication 6, **caractérisé en ce que** les débits de gaz de procédé sont reliés les uns aux autres et que le gaz de procédé est purifié en enlevant des substances volatiles que le produit dégage au sein du circuit de cristallisation dans le gaz de procédé.

8. Procédé selon les revendications 7 à 8, **caractérisé en ce qu'**il comprend des étapes ultérieures destinées au réchauffage du produit, au séchage du produit, à la cristallisation, à la réaction PPS ou au refroidissement du produit.

9. Procédé de préparation d'un polyester à masse moléculaire élevée par polycondensation en phase solide à partir d'un prépolymère de polyester solidifié selon l'une des revendications précédentes, comprenant au moins une étape de réchauffage du polyester, suivie d'au moins une étape de cristallisation, d'au moins une étape de réaction de polycondensation en phase solide et d'au moins une étape de refroidissement, au moins une étape de réchauffage et une étape ultérieure avec action d'un gaz de procédé étant réalisées dans le cadre dudit procédé, **caractérisé en ce qu'**au moins une partie du gaz de procédé issue de ladite étape ultérieure est utilisée pour réchauffer le polyester dans l'étape de réchauffage située en amont de la cristallisation.

10. Procédé selon la revendication 9, **caractérisé en ce que** le gaz de procédé issu de l'étape de refroidissement est utilisé pour réchauffer le polyester dans l'étape de réchauffage située en amont de la cristallisation.

11. Procédé selon l'une des revendications précédentes, **caractérisé en ce qu'**une étape de réchauffage du polyester à une température Tv est réalisée en amont de la première étape de cristallisation, Tv étant supérieure à 50 °C, notamment supérieure à 75 °C.

12. Procédé selon l'une des revendications précédentes, **caractérisé en ce que** Tv se situe dans la gamme comprise entre Tg - 30 °C et Tg + 30 °C, notamment dans la gamme comprise entre Tg et Tg + 20 °C, Tg étant la température de transition vitreuse du polyester mesurée par DSC.

13. Procédé selon l'une des revendications précédentes, **caractérisé en ce que** l'étape de réchauffage est réalisée dans un dispositif à lit fluidisé.

14. Procédé selon l'une des revendications précédentes, **caractérisé en ce que**, dans l'étape de réchauffage, on réalise un séchage du polycondensat jusqu'à ce que son taux d'humidité se situe entre 50 ppm d'eau et 2000 ppm d'eau, notamment entre 200 ppm d'eau et 1000 ppm d'eau.

15. Procédé selon l'une des revendications précédentes, **caractérisé en ce qu'**on utilise le liquide de lavage par la suite dans une étape du procédé destinée à préparer des polyesters de récupération comme, par exemple, des copeaux de bouteilles en polyester.

16. Procédé selon l'une des revendications 9 à 15, **caractérisé en ce que** l'apport spécifique en énergie est inférieur à 120 kWh/t, se situant notamment entre 80 et 110 kWh/t.

17. Installation destinée à la préparation d'un polyester à masse moléculaire élevée, comprenant au moins un dispositif de cristallisation (1) et un dispositif de réaction (2) qui chacun comportent des entrées de produit (1a, 2a) et des sorties de produit (1 b, 2b) ainsi que des entrées de gaz (1 c, 2c) et des sorties de gaz (1d, 2d), **caractérisée en ce qu'**une sortie de gaz (2d) du dispositif de réaction (2) est directement ou indirectement reliée à une entrée de gaz (3c) vers le système d'épuration de gaz (3) et qu'une sortie de gaz (3d) en provenance du système d'épuration de gaz (3) est reliée à une entrée de gaz (2c) du dispositif de réaction (2) et que le système d'épuration de gaz (3) comporte un dispositif d'épuration de gaz qui est alimenté par un liquide de lavage aqueux ainsi qu'un dispositif de séchage de gaz (4) situé en aval.

18. Installation selon la revendication 17, **caractérisée en ce que** la sortie de gaz (2d) du dispositif de réaction (2) est reliée à une entrée de gaz (1 c) du dispositif de cristallisation (1) et que la sortie de gaz (1 d) du dispositif de cristallisation (1) est reliée à l'entrée de gaz (3c) vers le système d'épuration de gaz (3) et que la sortie de gaz (3d) en provenance du système d'épuration de gaz (3) est reliée à l'entrée de gaz du dispositif de réaction.

19. Installation selon l'une des revendications 17 ou 18, comprenant au moins un dispositif de réchauffage (6) suivi d'un dispositif de cristallisation (1), d'un dispositif de réaction (2) et d'un dispositif de refroidissement (5), le dispositif de refroidissement (5) et le dispositif de réchauffage (6) comportant chacun des entrées de produit (5a, 6a) et des sorties de produit (5b, 6b) ainsi que des entrées de gaz (5c, 6c) et des sorties de gaz (5d, 6d), **caractérisée en ce qu'**une sortie de gaz (5d) du dispositif de refroidissement (5) est reliée à une entrée de gaz (6c) du dispositif de réchauffage (6).

20. Installation selon l'une des revendications 17 à 19, destinée à réaliser un procédé selon l'une des revendications 1 à 16.
